# EUROPEAN PATENT SPECIFICATION

(11) **EP 3 531 004 B1**
(45) Date of publication and mention of the grant of the patent: **16.03.2022**
(21) Application number: 17862494.6
(22) Date of filing: 29.09.2017
(51) Int. Cl.: F16L 59/065, F25D 23/06

(54) **VACUUM HEAT INSULATOR, AND HEAT-INSULATING CONTAINER AND HEAT-INSULATING WALL IN WHICH SAME IS USED**
VAKUUMWÄRMEISOLATOR UND WÄRMEISOLIERENDER BEHÄLTER SOWIE WÄRMEISOLIERENDE WAND DAMIT
ISOLANT THERMIQUE SOUS VIDE, AINSI QUE RÉCIPIENT CALORIFUGE ET PAROI CALORIFUGE L'UTILISANT

(30) Priority: 20.10.2016 JP 2016205697
(43) Date of publication of application: 28.08.2019
(73) Proprietor: Panasonic Intellectual Property Management Co., Ltd., Osaka-shi, Osaka 540-6207 (JP)
(72) Inventor: HIRANO, Toshiaki, Osaka-shi, Osaka 540-6207 (JP); KAWARAZAKI, Hideji, Osaka-shi, Osaka 540-6207 (JP); KITANO, Tomoaki, Osaka-shi, Osaka 540-6207 (JP)
(74) Representative: Eisenführ Speiser
(86) International application number: PCT/JP2017/035378
(87) International publication number: WO 2018/074178

(56) References cited:
- WO-A1-2016/113423
- WO-A1-2016/157747
- WO-A1-2016/163074
- JP-A- 2014 047 867
- JP-A- 2017 155 866

## Description

### TECHNICAL FIELD

The present disclosure relates to a vacuum heat insulator, and a heat insulating container and a heat insulating wall, using the vacuum heat insulator.

### BACKGROUND ART

There is known a vacuum-sealing device for manufacturing a vacuum heat insulator used for a refrigerator and the like (e.g., refer to PTL 1). This type of vacuum-sealing device includes a chamber container inside which pressure can be reduced, and a seal device that seals an opening of an exterior covering with thermal welding in the chamber container.

According to the vacuum-sealing device disclosed in PTL 1, a material which is a sealing target and has a core material inside a bag-shaped exterior covering is placed within a chamber container. Subsequently, the sealing device is driven to seal an opening of the material which is a sealing target while a pressure inside the chamber container is reduced. This enables manufacturing of a vacuum heat insulating material in which the core material is sealed into the external covering under a reduced pressure.

Unfortunately, the vacuum-sealing device disclosed in PTL 1 needs to allow the chamber container to increase in size to manufacture a vacuum heat insulating material suitable for a large-scale apparatus such as a refrigerator. Increasing the chamber container in size requires a longer time to reduce a pressure in its inner space to a desired pressure. Accordingly, manufacturing costs of the vacuum heat insulating material increase.

The vacuum insulation housing of PTL 2 comprises a vacuum insulation body configured by a hollow-shaped resin gas barrier container with a core material contained and vacuum-sealed therein; an outer case disposed on the high temperature side and formed from a gas barrier material; and an inner case disposed on the low temperature side. The vacuum insulation body and the outer case are arranged in close contact with each other.

The vacuum heat insulation body known from PTL 3 is provided with: an outer case; an inner case; an open cell urethane foam filling a space for heat insulation between the outer case and the inner case; and a vacuum discharge port which is provided to the outer case or the inner case. The open cell urethane foam is provided with a through passage that penetrates the open cell urethane foam from the vacuum discharge port. The vacuum discharge port is sealed after the space for heat insulation, which is filled with the open cell urethane foam, is vacuum-evacuated.

### Citation List

### Patent Literature

PTL 1: Unexamined Japanese Patent Publication No. 2013-23229
PTL 2: PCT Patent Application Publication No. 2016/157747
PTL 3: PCT Patent Application Publication No. 2016/163074

### SUMMARY OF THE INVENTION

The present invention relates to a vacuum heat insulator, a heat insulating container and a heat insulating wall as defined in the appended claims. The present disclosure is made in light of a problem as described above, and provides a vacuum heat insulator, a heat insulating container, and a heat insulating wall, being capable of sufficiently securing a gas barrier property and heat insulation with high reliability while reducing manufacturing costs without increasing a chamber container in size.

Specifically, the vacuum heat insulator according to the present disclosure includes a container constituting an airtight structure, a core material provided inside the container, an exhaust hole provided in the container, and a sealant for sealing the exhaust hole. The exhaust hole is configured such that evacuation inside the container is performed through the exhaust hole. The sealant is configured to seal the exhaust hole while maintaining a vacuum inside the container. The sealant includes at least a metal foil. The container includes an inner plate and an outer plate. The inner plate is provided with the exhaust hole. A reinforcement is provided between the inner plate and the core material.

The structure as described above does not cause a sealed portion after the evacuation through the exhaust hole to remain as a protrusion, so that the vacuum heat insulator is applicable to a wide range of uses. This structure enables manufacturing of a vacuum heat insulator suitable for a large apparatus like a refrigerator while enabling manufacturing costs to be reduced without increasing a size of the chamber container of the vacuum-sealing device. The sealed portion also has a gas barrier property, so that a degree of vacuum of the vacuum heat insulator can be maintained for a long time. Thus, this structure enables providing the vacuum heat insulator that is applicable to a wide range of uses, and that is capable of maintaining a gas barrier property and heat insulation with high reliability for a long period.

In the vacuum heat insulator according to an exemplary embodiment of the present disclosure, the sealant includes the metal foil provided on its surface opposite to the exhaust hole with a heat-resistant layer having a melting point of 200°C or more. That is, the sealant includes the heat-resistant layer having a melting point of 200°C or more, wherein the heat-resistant layer is provided on the surface of the metal foil opposite to the exhaust hole.

This structure enables thermal damage to the metal foil of the sealant to be reduced when an adhesive layer (sealing adhesive layer) of the sealant is welded to a container surface for sealing, so that a gas barrier property of the metal foil can be maintained.

In the vacuum heat insulator according to an exemplary embodiment of the present disclosure, the sealant includes the metal foil provided on at least a part of its surface opposite to the exhaust hole with an adhesive layer (sealing adhesive layer) having a melting point of 180°C or less. That is, the sealant includes an adhesive layer having a melting point of 180°C or less, wherein the heat-resistant layer is provided on a first surface of the metal foil, and the adhesive layer is provided on a second surface of the metal foil, wherein the first surface of the metal foil locates opposite to the exhaust port, and the second surface of the metal foil locates close to the exhaust port.

This structure enables the sealant to be welded to the container surface by applying thermal energy to the sealant and the container to melt the adhesive layer.

As described above, in the vacuum heat insulator according to the present disclosure, the container is configured to include an inner plate and an outer plate, the inner plate being provided with an exhaust hole. The container includes a reinforcement between the inner plate and the core material.

This structure enables welding strength at the time of welding the adhesive layer of the sealant to the container surface to be increased by permeating the adhesive layer of the sealant into the container surface without deforming a heat insulator by reducing physical damage to the core material.

In the vacuum heat insulator according to an exemplary embodiment of the present disclosure, it is more preferable that the metal foil has a thickness of 10 µm or more.

This structure allows the sealed portion to have a higher gas barrier property, so that the vacuum heat insulator can maintain a degree of vacuum, or heat insulation performance, for a long period.

In the vacuum heat insulator according to an exemplary embodiment of the present disclosure, it is more preferable that the heat-resistant layer has a thickness of equal to or more than 5 µm and less than 38 µm.

This structure enables thermal damage to the metal foil to be reduced when the adhesive layer of the sealant is welded to the container surface for sealing, so that the gas barrier property of the metal foil can be maintained.

In the vacuum heat insulator according to an exemplary embodiment of the present disclosure, it is more preferable that the adhesive layer has a thickness of 25 µm or more.

This structure enables the adhesive layer to be welded to the container surface by applying thermal energy to the sealant and the container to melt the adhesive layer.

In the vacuum heat insulator according to an exemplary embodiment of the present disclosure, it is more preferable that the reinforcement has a thickness of 0.1 mm or more.

This structure enables welding strength at the time of welding the adhesive layer to the container surface to be increased by permeating the adhesive layer into the container surface without deforming the heat insulator by reducing physical damage to the core material.

In the vacuum heat insulator according to an exemplary embodiment of the present disclosure, it is more preferable that the exhaust hole has a bore diameter of 1 mm or more.

This structure enables evacuation of the core material such as open cell urethane foam to be performed in a short time without deterioration in exhaust conductance due to the bore diameter.

A heat insulating container according to the present disclosure includes the vacuum heat insulator having any one of the above structures. This structure enables providing the heat insulating container capable of maintaining heat insulation performance for a long period with low cost.

A heat insulating wall according to the present disclosure includes the vacuum heat insulator having any one of the above structures. This structure enables providing the heat insulating wall capable of maintaining heat insulation performance for a long period with low cost.

### BRIEF DESCRIPTION OF DRAWINGS

Figures 1 to 5 show heat insulator constructions useful for the present invention or usable with the present invention. Only figure 6 shows a structure according to the invention including a reinforcement.
FIG. 1 is a sectional view of a refrigerator including a vacuum heat insulator according to an exemplary embodiment of the present disclosure.
FIG. 2 is an enlarged perspective view of a part of a refrigerator door including the vacuum heat insulator according to the exemplary embodiment of the present disclosure.
FIG. 3A is a sectional view of the vacuum heat insulator according to the exemplary embodiment of the present disclosure, taken along line 3A-3A in FIG. 2.
FIG. 3B is a sectional view of the vacuum heat insulator according to the exemplary embodiment of the present disclosure, taken along line 3B-3B in FIG. 3A.
FIG. 4A is a sectional view of another refrigerator door including the vacuum heat insulator according to the exemplary embodiment of the present disclosure, taken along line 4A-4A in FIG. 2.
FIG. 4B is a sectional view of the other refrigerator door including the vacuum heat insulator according to the exemplary embodiment of the present disclosure, taken along line 4B-4B in FIG. 4A.
FIG.5 is a schematic view of a sealing device used for sealing the vacuum heat insulator according to the exemplary embodiment of the present disclosure.
FIG. 6 is an enlarged sectional view of a sealed portion of the vacuum heat insulator according to the exemplary embodiment of the present disclosure.
FIG. 7 is a flowchart illustrating a method for manufacturing the refrigerator door including the vacuum heat insulator according to the exemplary embodiment of the present disclosure.
FIG. 8 is a graph showing measurement results of bore diameters of respective exhaust ports of the vacuum heat insulator according to the exemplary embodiment of the present disclosure, and attained degrees of vacuum.
FIG. 9 is a graph showing measurement results of bore diameters of respective exhaust ports of the vacuum heat insulator according to the exemplary embodiment of the present disclosure, and times until attaining 100 Pa.

### DESCRIPTION OF EMBODIMENT

An exemplary embodiment of the present disclosure will be described below with reference to the drawings. The following exemplary embodiment should not be construed to limit the scope of the present disclosure.

### (First exemplary embodiment)

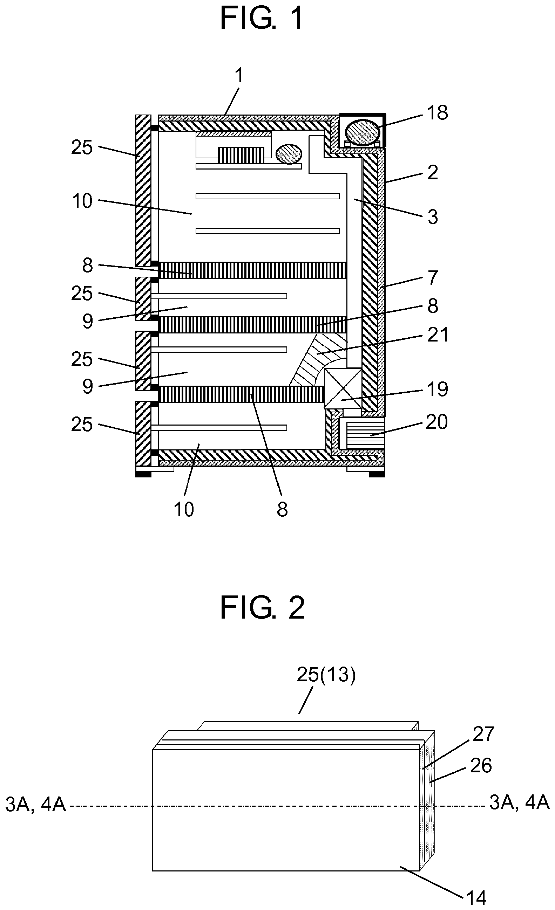

FIG. 1 is a sectional view of a refrigerator including a vacuum heat insulator according to an exemplary embodiment of the present disclosure.

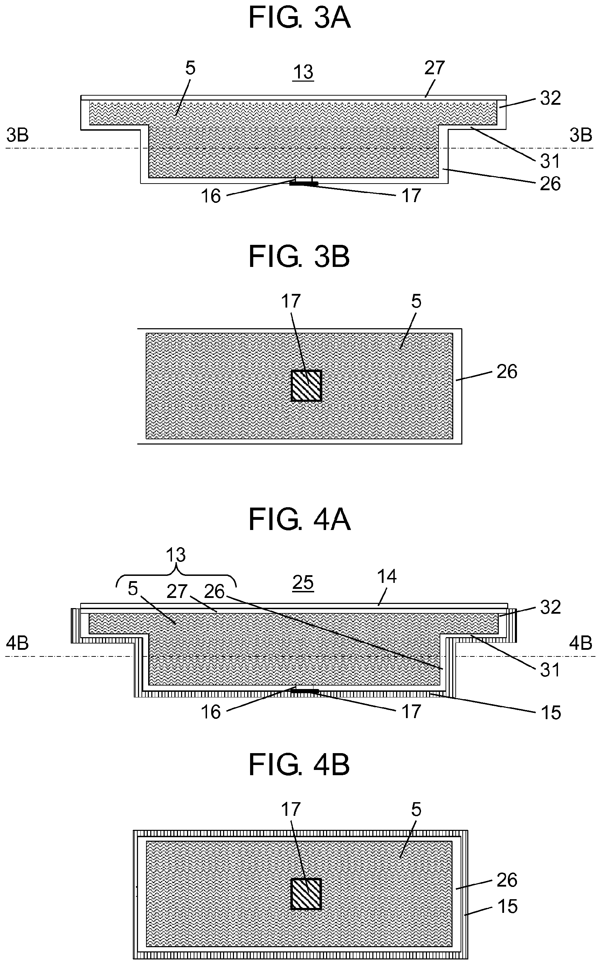

FIG. 2 is an enlarged perspective view of a part of a refrigerator door including the vacuum heat insulator according to the exemplary embodiment of the present disclosure. FIG. 3A is a sectional view of the vacuum heat insulator according to the exemplary embodiment of the present disclosure, taken along line 3A-3Ain FIG. 2. FIG. 3B is a sectional view of the vacuum heat insulator according to the exemplary embodiment of the present disclosure, taken along line 3B-3B in FIG. 3A. FIG. 4A is a sectional view of another refrigerator door including the vacuum heat insulator according to the exemplary embodiment of the present disclosure, taken along line 4A-4A in FIG. 2. FIG. 4B is a sectional view of the other refrigerator door including the vacuum heat insulator according to the exemplary embodiment of the present disclosure, taken along line 4B-4B in FIG. 4A.

### 1. Application example of vacuum heat insulator to refrigerator door

As illustrated in FIG. 1, refrigerator 1 includes a heat insulation box in which foam heat insulating material 7 is filled between outer box 2 and inner box 3. The heat insulation box is provided in its inside with freezing chambers 9 and refrigerating chambers 10 divided by respective partition bodies 8. The heat insulation box is provided in its upper portion with an upper machine chamber. In the upper machine chamber, compressor 18 is disposed. The heat insulation box is provided in its lower portion with a lower machine chamber. In the lower machine chamber, evaporation pan 20 is disposed. Corresponding one of freezing chambers 9 is provided in its back surface with a cooling chamber. In the cooling chamber, evaporator 19 is disposed. The corresponding one of freezing chambers 9 and the cooling chamber are partitioned by cooling chamber wall body 21. Freezing chambers 9 and refrigerating chambers 10 of the heat insulation box have respective front openings each provided with refrigerator doors 25.

Each of refrigerator doors 25 includes vacuum heat insulator 13 according to the exemplary embodiment of the present disclosure. As illustrated in FIGS. 2, 3A, and 3B, refrigerator door 25 provided with vacuum heat insulator 13 includes outer plate 27, exterior appearance part 14 disposed on a surface of outer plate 27, such as a glass plate or a metal plate, inner plate 26 provided in its inside with gas barrier layer 31 against oxygen or the like, and open cell urethane foam 5 (core material of the vacuum heat insulator 13) filled in a heat insulation space between outer plate 27 and inner plate 26. In the present exemplary embodiment, outer plate 27 and inner plate 26 are each equivalent to an exterior covering. The exterior covering encloses an outer surface of open cell urethane foam 5 (core material of vacuum heat insulator 13).

Specifically, vacuum heat insulator 13 includes the core material (open cell urethane foam 5) serving as a spacer, and the exterior covering (outer plate 27 and inner plate 26) with a gas barrier property, and is formed such that the core material is inserted into the exterior covering and the exterior covering is sealed while the inside of the exterior covering is reduced in pressure. Outer plate 27 and inner plate 26 are sealed with thermal welding layer 32 adhering to their outer peripheries.

As illustrated in FIGS. 4A and 4B, refrigerator door 25 can be obtained by bonding exterior appearance part 14 and interior appearance part 15 to vacuum heat insulator 13 of the present exemplary embodiment with an adhesive or the like.

### 2. Manufacturing method

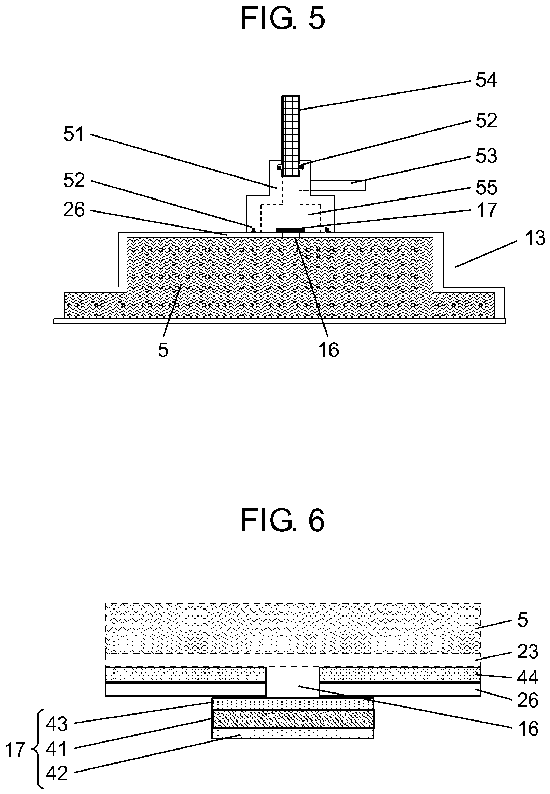

Next, a method for manufacturing refrigerator door 25 including vacuum heat insulator 13 according to the exemplary embodiment of the present disclosure will be described with reference to FIGS. 5 to 7.

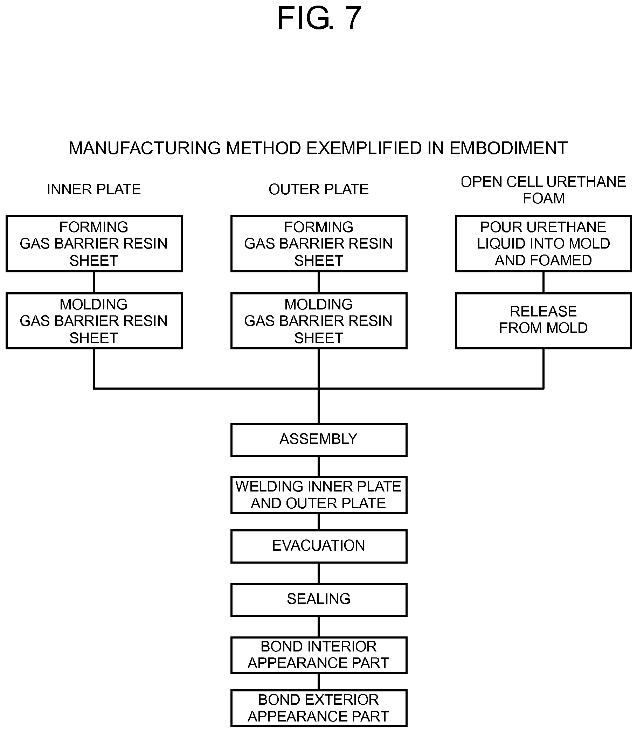

FIG.5 is a schematic view of a sealing device used for sealing the vacuum heat insulator according to the exemplary embodiment of the present disclosure, and FIG. 6 is an enlarged sectional view of a sealed portion of the vacuum heat insulator according to the exemplary embodiment of the present disclosure. FIG. 7 is a flowchart illustrating a method for manufacturing the refrigerator door including the vacuum heat insulator according to the exemplary embodiment of the present disclosure.

As illustrated in FIGS. 3A, 4A, and 5, inner plate 26 of vacuum heat insulator 13 is provided with exhaust port (exhaust hole) 16. As illustrated in FIG. 5, vacuum heat insulator 13 is formed such that while airtightness in a space surrounded by outer plate 27 and inner plate 26 is maintained by sealing end portion 54 connected to a welding mechanism such as an ultrasound welding apparatus, and packing 52 provided around a leading end portion of sealing end portion 54, a vacuum pump exhausts air from the space through exhaust cylinder 53, and then exhaust port 16 is sealed by sealant 17, for example. Open cell urethane foam 5 has fine air vents of 2 µm to 30 µm. Completed refrigerator door 25 provided with vacuum heat insulator 13 has exhaust port 16 sealed by sealant 17. Sealant 17 includes at least a metal foil.

Outer plate 27 is made of a material having a high oxygen gas barrier property, as with inner plate 26. Refrigerator door 25 of the present exemplary embodiment includes outer plate 27 in a planar shape, and outer plate 27 is made of a resin laminated film or sheet including a metal layer of aluminum, stainless steel, or the like. For example, there is used a laminated film or sheet, including: an outer layer of a polyethylene terephthalate layer serving as a protective material; an intermediate layer of an aluminum foil layer being a gas barrier material; and an inner layer of CPP (non-stretched polypropylene layer) when inner plate 26 has an adhesive layer of a polypropylene layer as illustrated in FIGS. 3A and 4A. After thermal welding of the outer layer, the intermediate layer, and the inner layer, constituting a laminated film or a sheet, the laminated film or the sheet is only cut into a size of outer plate 27 in a forming process.

Inner plate 26 is made of a material having a high oxygen gas barrier property and a high water vapor barrier property, and needs to principally inhibit permeation of air and water vapor.

For this reason, there is a method including a step of producing a multilayer sheet with an extrusion forming machine or the like, the multilayer sheet including ethylene-vinyl alcohol copolymer resin (EVOH) being a material with a low oxygen permeability, sandwiched by layers of polypropylene or polyethylene, being a material with a low water vapor permeability, to increase its formability, for example. The method further includes a step of forming the produced multilayer sheet into a shape corresponding to a portion requiring heat insulation by vacuum forming, pressure forming, or blow forming. Using polyvinyl alcohol (PVA) instead of the EVOH also enables a similar effect to be obtained.

Inner plate 26 includes exhaust port 16 and an outer cylinder for connecting exhaust port 16 to the vacuum pump. The outer cylinder is provided with a sealing end portion movable in an axis direction of the outer cylinder to weld sealant 17. After evacuation inside vacuum heat insulator 13, the sealing end portion welds sealant 17 under pressure to enable a degree of vacuum to be maintained.

In the present exemplary embodiment, sealant 17 is made of a laminated film or sheet, including: a heat-resistant protective layer of a polyethylene terephthalate layer; an intermediate layer of an aluminum foil layer being a gas barrier material; and an inner layer of CPP (non-stretched polypropylene layer) when inner plate 26 has an adhesive layer of a polypropylene layer as illustrated in FIGS. 3A and 4A. It is preferable that sealant 17 is preliminarily cut into a size of 20 mm by 20 mm, and is temperately placed so as to completely cover exhaust port 16, and that a part of sealant 17 is bonded to a surface of inner plate 26 by thermal welding or the like, for example. In this state, evacuation of a space surrounded by outer plate 27 and inner plate 26 (including open cell urethane foam 5 provided in the space) is performed by the vacuum pump through the outer cylinder connected to a shaft center of a horn of a welding mechanism such as an ultrasound welding machine through an O-ring, for example. When a degree of vacuum reaches a predetermined degree of vacuum, the sealant is bonded to inner plate 26 surrounding exhaust port 16 by ultrasound welding with the horn of the ultrasound welding machine. This enables vacuum heat insulator 13 to be obtained.

Next, a method for manufacturing open cell urethane foam 5 will be described with reference to FIG. 7.

Open cell urethane foam 5 is molded by pouring urethane liquid into a mold having a shape of the heat insulation space between outer plate 27 and inner plate 26, foaming the urethane liquid, and releasing it from the mold.

Open cell urethane foam 5 includes a core layer and a skin layer covering an outer periphery of the core layer. The skin layer corresponds to a layer of a core material (urethane foam) that has a large resin thickness (insufficiently foamed) and is generated around an interface with a wall surface of the mold or the like upon open cell urethane foam 5 foaming.

Open cell urethane foam 5 has a large porosity (e.g., 95%), and includes a plurality of bubbles, bubble films, and bubble structures. Each of the bubble films is a film-shaped portion provided between at least one pair of bubbles facing each other. Each of the bubble structures is formed between at least one pair of bubbles facing each other to continue to the bubble film between the pair of bubbles facing each other and another pair of bubbles facing each other, and is formed so as to have a distance between the pair of bubbles facing each other, more than a thickness of the bubble film.

Specifically, each of the bubble films has a thickness (distance between a pair of bubbles) of about 3 µm, and each of the bubble structures has a thickness (distance between a pair of bubbles) of about 150 µm.

In open cell urethane foam 5, the skin layer insufficiently foamed has a larger ratio of the bubble structures than the core layer.

While an insufficiently foamed area of open cell urethane foam 5 may have a state where bubbles are dispersed in bulk resin, the bubble films and the bubble structures defined as described above are also applicable to the state.

That is, it is assumed that most of open cell urethane foam 5 is occupied with the bubble structures in such a state.

According to actual thickness described above, it can be said that a portion having a distance of 3 µm or less between a pair of bubbles facing each other is a typical bubble film, and a portion having a distance of 150 µm or more between a pair of bubbles facing each other is a typical bubble structure.

To secure continuous air permeability among all bubbles in open cell urethane foam 5, all the bubble films are each provided with a first through hole and the bubble structures are each provided with a second through hole.

The first through hole provided in each of the bubble films is formed by a warp at a molecular level caused by foaming two or more types of powdered urethane having no mutual affinity and a difference in molecular weight, for example.

As the two or more types of powdered urethane, polyisocyanate and a mixture of polyol containing predetermined composition are available. When these types of powdered urethane react under existence of a foaming agent such as water, the first through holes can be formed. Besides this, the first through holes can also be formed by using calcium stearate or the like.

The first through holes have an average diameter of 2 µm to 8 µm. The first through holes constitute the air vents of open cell urethane foam 5.

Meanwhile, the second through hole to be formed in each of the bubble structures can be formed by filling powder with fine particles (powdered polyethylene, powdered nylon, or the like) having no affinity with (less adhesive to) the powdered urethanes while being mixed with the powdered urethanes, at each interface between the powder with fine particles and the bubbles.

While each of the bubbles has a particle diameter of about 100 µm, setting a particle diameter of about 10 µm to 30 µm for powder with fine particles enables a communication rate using the second through holes to be optimized. Thus, the second through holes have an average diameter of 10 µm to 30 µm.The second through holes also constitute the air vents of open cell urethane foam 5.

As described above, the poured urethane solution includes the mixture of two or more types of powdered urethane having no mutual affinity for forming the first through holes in the bubble films of the foamed bubbles. The poured urethane solution further includes the mixture of the powdered urethanes and the fine powder having no affinity with the powdered urethanes for forming the second through holes in the bubble structures shaping the foamed bubbles.

The open cell urethane foam includes communication holes each having a dimeter of about 200 µm at most with high exhaust resistance. For this reason, there are a method for forming an exhaust groove communicating with exhaust port 16 to reduce exhaust time, and a method for integrally foaming a peripheral portion of the exhaust port with a fiber-like material with low exhaust resistance such as glass wool. This kind of method enables productivity to be significantly increased while reducing exhaust time.

### 3. Assembly

Next, assembly of vacuum heat insulator 13 will be described with reference to FIG. 7.

Molded open cell urethane foam 5 is housed in inner plate 26, and outer plate 27 is placed on inner plate 26. Then, heat and pressure are applied to an outer peripheral portion of outer plate 27 to thermally weld inner plate 26 and outer plate 27.

At this time, when the adhesive layer of inner plate 26 is a polypropylene layer, thermal welding is performed between the adhesive layer of inner plate 26 and the non-stretched polypropylene layer (CPP) being the adhesive layer of outer plate 27, as illustrated in FIGS. 3A and 4A.

While there is no illustration, various gas absorbents may be provided inside the space formed by inner plate 26 and outer plate 27 together with open cell urethane foam 5.

As the gas absorbents, an air absorbent for selectively absorbing air, and a moisture absorbent for absorbing moisture, are typically known. Such gas absorbents absorb residual gas after evacuation, minute gas entered by passing through inner plate 26 and outer plate 27, having high gas barrier property, in a long period, so that a high degree of vacuum can be maintained for a long period of time.

Subsequently, as illustrated in FIG. 5, sealing end portion 54 provided in a welding mechanism such as an ultrasound welding apparatus, for example, is disposed over exhaust port 16 provided in outer plate 27 using outer cylinder 51 and packing 52 to airtightly seal the space surrounded by outer plate 27 and inner plate 26. The outer cylinder 51 is disposed so as to surround exhaust port 16 using packing 52 likewise to airtightly seal the space surrounded by outer plate 27 and inner plate 26. Outer cylinder 51 is connected to the vacuum pump, and evacuation is performed for a predetermined time. Then, exhaust port 16 is welded with CPP (non-stretched polypropylene layer) being sealing adhesive layer 43 of sealant 17 by ultrasound welding or the like.

To allow exhaust port 16 to bear pressure at the time of welding when ultrasound welding or the like is performed, and to reduce influence of deformation of outer plate 27 due to deformation of the core material of the open cell urethane foam caused by pressure reduction at the time of evacuation, it is desirable to provide reinforcement 44 made of steel metal or the like, having a size equal to or more than that of packing 52 between outer cylinder 51 and inner plate 26, in the periphery of exhaust port 16.

Next, exhaust port 16 and sealant 17 will be described in more detail with reference to FIG. 6 illustrating an enlarged view of exhaust port 16 and sealant 17.

To improve productivity by reducing exhaust time, as illustrated in FIG. 6, it is desirable to provide air vents 23 in open cell urethane foam (core material) 5 to allow air vent 23 to communicate with exhaust port 16. When reinforcement 44 is provided between open cell urethane foam (core material) 5 and inner plate 26, deformation of the core material due to pressure applied at the time of sealing can be prevented. Sealant 17 is composed of sealing adhesive layer 43, metal foil 41, and heat-resistant protective layer 42 in this order from a side close to exhaust port 16.

In the present exemplary embodiment, sealing adhesive layer 43 is disposed in at least a part of an inner surface (a side facing exhaust port 16) of metal foil 41, and has a melting point of 180°C or less. Heat-resistant protective layer 42 is disposed in an outer surface (an opposite side to the side facing exhaust port 16) of metal foil 41, and has a melting point of 200°C or more.

In the present exemplary embodiment, metal foil 41 has a thickness of 10 µm or more, and heat-resistant protective layer 42 has a thickness of equal to or more than 5 µm and less than 38 µm. Sealing adhesive layer 43 has a thickness of 25 µm or more.

Reinforcement 44 is disposed in contact with inner plate 26, and has a portion corresponding to exhaust port 16, the portion including an opening (hole). Reinforcement 44 has a planar size set larger than that of at least sealant 17. Reinforcement 44 has a thickness of 0.1 mm or more in the present exemplary embodiment.

In addition, reinforcement 44 has dimensions in a horizontal projection plane, the dimensions being set so as to be larger than the outline of sealing end portion 54.

Exhaust port 16 has a substantially circular shape in the present exemplary embodiment, and exhaust port 16 has a bore diameter of 1 mm or more.

### 4. Evaluation result

Table 1 is a list showing evaluation results of airtightness of the vacuum heat insulator according to the example of the exemplary embodiment of the present disclosure, for each sealing method after evacuation, and for each welding condition.

**[Table 1]**

| List of evaluation results of airtightness for each sealing method after evacuation and for each welding condition | | | | | | | |
|---|---|---|---|---|---|---|---|
| Sealing method | Temperature [°C] | Pressure [MPa] | Time [sec] | Frequency [kHz] | Amplitude | Airtightness evaluation result | Mode |
| Thermal welding | 160 | 0.2 | 5 | - | - | × | Insufficient welding |
| | 165 | 0.2 | 5 | - | - | ○ | |
| | 168 | 0.2 | 5 | - | - | × | Aluminum foil crack |
| | 170 | 0.2 | 5 | - | - | ×× | Aluminum foil crack |
| Ultrasound welding | - | 0.1 | 0.3 | 40 | 100% | × | Insufficient welding |
| | - | 0.1 | 0.4 | 40 | 100% | ○ | - |
| | - | 0.1 | 0.5 | 40 | 100% | ○ | - |
| | - | 0.1 | 0.6 | 40 | 100% | × | Aluminum foil crack |

The evaluation above was performed by using the following: a PP/EVOH/PP multilayer sheet as inner plate 26; PET (with a thickness of 12 µm) as a heat-resistant protective layer of sealant 17; aluminum foil (with a thickness of 35 µm) as the metal foil; and CPP (with a thickness of 50 µm) as the adhesive layer. Hereinafter, examinations were performed according to the specification above unless otherwise specified.

The results in Table 1 show that airtightness can be obtained without problems under certain conditions by any sealing methods such as thermal welding and ultrasound welding. It is perceived that the thermal welding at a low temperature caused a leak due to insufficient welding, and that the thermal welding at a high temperature caused a leak due to a crack of the aluminum foil. It is also perceived that the ultrasound welding for a short time caused a leak due to insufficient welding, and that the ultrasound welding for a long time caused a leak due to a crack of the aluminum foil.

The airtightness evaluation is determined by using an He leak detector as follows: a rise in He intensity is indicated as "NG", showing a leak; and no rise therein is indicated as "OK". In addition, the mode shows an observation result for a cause of a leak using an optical microscope when the leak was found.

Table 2 shows evaluation results of airtightness for each thickness of the aluminum film in the vacuum heat insulator according to the exemplary embodiment of the present disclosure.

**[Table 2]**

| Evaluation result of airtightness for each aluminum film thickness | | |
|---|---|---|
| Aluminum foil thickness | Airtightness evaluation result | Mode |
| 7 | × | Aluminum foil crack |
| 12 | ○ | |
| 35 | ○ | |
| 57 | ○ | |
| 75 | ○ | |

Specifically, Table 2 shows that no leak was found in the aluminum foil with a thickness of 12 µm or more. Meanwhile, it is conceived that when the aluminum foil had a thickness of 7 µm or less, the aluminum foil had insufficient strength against a temperature rise at the time of welding to cause a crack, thereby causing a leak.

Table 3 shows evaluation results of airtightness for each film thickness of the heat-resistant protective layer in the vacuum heat insulator according to the exemplary embodiment of the present disclosure.

**[Table 3]**

| Evaluation result of airtightness for each PET film thickness | | |
|---|---|---|
| PET film thickness | Airtightness evaluation result | Mode |
| 3 | × | Aluminum foil crack |
| 5 | ○ | |
| 12 | ○ | |
| 16 | ○ | |
| 25 | ○ | |
| 38 | × | Aluminum foil crack |

Specifically, Table 3 shows that no leak was found in the PET with a thickness of 5 µm or more and 25 µm or less. Meanwhile, it is conceived that the PET having a thickness of 3 µm or less caused a temperature of the aluminum foil to directly rise, and the PET having a thickness of 38 µm or more increased its heat capacity to cause a temperature of the entire PET to rise, thereby raising a temperature of the aluminum foil due to heat conduction to the aluminum foil, and that the aluminum foil had insufficient strength against the temperature rise to cause a crack, thereby causing a leak.

Table 4 shows evaluation results of airtightness for each film thickness of the adhesive layer in the vacuum heat insulator according to the exemplary embodiment of the present disclosure.

**[Table 4]**

| Evaluation result of airtightness for each CPP layer film thickness | | |
|---|---|---|
| CPP film thickness | Airtightness evaluation result | Mode |
| 20 | × | Insufficient welding |
| 25 | ○ | |
| 50 | ○ | |
| 100 | ○ | |

Specifically, Table 4 shows that no leak was found in the CPP layer with a thickness of 25 µm or more. Meanwhile, it is conceived that when the CPP layer had a thickness of 20 µm or less, the CPP melted at the time of welding insufficiently reacted with the PP to cause insufficient welding, thereby causing a leak.

Table 5 shows evaluation results of airtightness for each thickness of the reinforcement in the vacuum heat insulator according to the exemplary embodiment of the present disclosure.

**[Table 5]**

| Evaluation result of airtightness for each reinforcement thickness | | |
|---|---|---|
| Reinforcement thickness | Airtightness evaluation result | Mode |
| NONE | × | Insufficient welding |
| 0.1 | ○ | |
| 0.2 | ○ | |
| 0.3 | ○ | |

Specifically, Table 5 shows that no leak was found in the steel metal being the reinforcement, with a thickness of 0.1 mm or more. Meanwhile, it is conceived that when no reinforcement was provided, deformation of the core material caused by pressure at the time of welding dispersed a load to cause the melted CPP to insufficiently react with the PP to cause insufficient welding, thereby causing a leak.

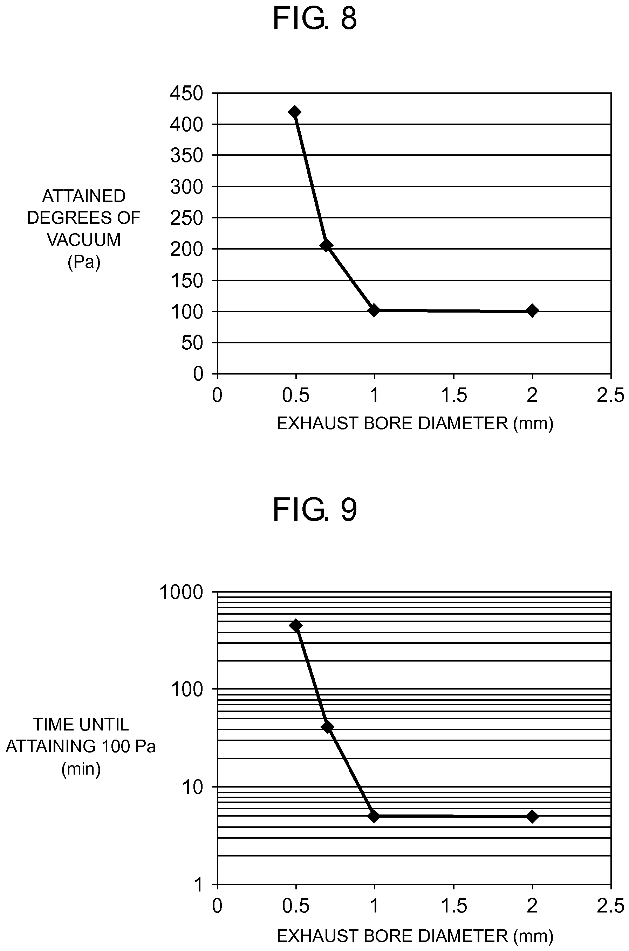

FIG. 8 is a graph showing measurement results of bore diameters of respective exhaust ports of the vacuum heat insulator according to the exemplary embodiment of the present disclosure, and attained degrees of vacuum. The attainment degree of vacuum was obtained by reading a numeric value of a Pirani gage whose sensor was fixed with an adhesive for use in vacuum in a through hole with a diameter of 1 mm bored in inner plate 26 over the air vents of the open cell urethane foam, for examination, at the time after a mechanical booster pump (at an exhaust speed of 10000 L/min) exhausted air for five minutes.

The measurement results in FIG. 8 shows that the exhaust port having a diameter of 1 mm or more allowed the attained degree of vacuum to be about 100 Pa, and that a diameter more than the above allowed the attainment degree of vacuum to change little.

FIG. 9 is a graph showing measurement results of bore diameters of respective exhaust ports of the vacuum heat insulator according to the exemplary embodiment of the present disclosure, and times until attaining 100 Pa.

The measurement results in FIG. 9 shows that the exhaust port having a diameter of 1 mm or more allowed the attained degree of vacuum to be 100 Pa in an exhaust time of about five minutes, and that when the exhaust port was reduced in diameter to 0.7 mm or 0.5 mm, the exhaust time suddenly increased. That is, allowing the exhaust port to have a diameter of 1 mm or more enables the exhaust time to be shortened, so that productivity can be improved.

While there is described an example of vacuum heat insulator 13 that constitutes refrigerator door 25 in the present exemplary embodiment, vacuum heat insulator 13 of the present disclosure also can be used for partition body 8 being a heat insulating wall of the refrigerator illustrated in FIG. 1.

This case also enables a manufacturing method similar to that of the present exemplary embodiment to be used for manufacturing. Thus, while detailed description is eliminated, a resin molding may be formed by blow molding different from the molding in the manufacturing method of the present exemplary embodiment.

This case has the steps of: molding a resin molding by blow molding with a resin having a high oxygen gas barrier property and water vapor gas barrier property; pouring open cell urethane foam 5 being a core material through an inlet port of the resin molding to foam open cell urethane foam 5; and foaming open cell urethane foam 5 integrally with the resin molding without being released from a mold. When evacuation is performed through the inlet port and the inlet port is sealed using sealant 17 exemplified in the present disclosure, vacuum heat insulator 13 can be obtained. This method enables achieving simplification of production steps as well as significant reduction in capital investment.

In addition, vacuum heat insulator 13 according to the exemplary embodiment of the present disclosure 13 also can be used for a heat insulating container such as a case for storing foods, in a storage room, for example.

### INDUSTRIAL APPLICABILITY

As described above, the present disclosure enables providing a vacuum heat insulator with high heat insulation performance in high quality at low cost, and can be widely applied to vacuum heat insulators, heat insulating containers using the vacuum heat insulators, and heat insulating walls using the vacuum heat insulators, for apparatuses for home use, such as refrigerators and electric water heaters, vending machines, automobiles, and houses.

### REFERENCE MARKS IN THE DRAWINGS

- 1: refrigerator
- 2: outer box
- 3: inner box
- 5: open cell urethane foam (core material)
- 7: foam heat insulating material
- 8: partition body
- 9: freezing chamber
- 10: refrigerating chamber
- 13: vacuum heat insulator
- 14: exterior appearance part
- 15: interior appearance part
- 16: exhaust port (exhaust hole)
- 17: sealant
- 18: compressor
- 19: evaporator
- 20: evaporation pan
- 21: cooling chamber wall body
- 23: air vent
- 25: refrigerator door
- 26: inner plate
- 27: outer plate
- 31: gas barrier layer
- 32: thermal welding layer
- 41: metal foil
- 42: heat-resistant protective layer
- 43: sealing adhesive layer (adhesive layer)
- 44: reinforcement
- 51: outer cylinder
- 52: packing
- 53: exhaust cylinder
- 54: sealing end portion

## Claims

1. A vacuum heat insulator (13) comprising:
a container constituting an airtight structure;
a core material (5) provided inside the container;
an exhaust hole (16) provided in the container; and
a sealant (17) for sealing the exhaust hole (16),
wherein
the exhaust hole (16) is configured for evacuation inside the container through the exhaust hole (16),
the sealant (17) is configured to seal the exhaust hole (16) while maintaining a vacuum inside the container, and
the sealant (17) includes at least a metal foil (41),
the container includes an inner plate (26) and an outer plate (27),
the inner plate (26) is provided with the exhaust hole (16),
**characterized in that** a reinforcement (44) is provided between the inner plate (26) and the core material (5).

2. The vacuum heat insulator (13) according to claim 1, wherein
the sealant (17) further includes a heat-resistant layer (42) having a melting point of 200°C or more, wherein the heat-resistant layer (42) is provided on a surface of the metal foil (41) opposite to the exhaust hole (16).

3. The vacuum heat insulator (13) according to claim 2, wherein
the sealant (17) further includes an adhesive layer (43) having a melting point of 180°C or less,
wherein the heat-resistant layer (42) is provided on a first surface of the metal foil (41), and the adhesive layer (43) is provided on a second surface of the metal foil (41),
wherein the first surface of the metal foil (41) locates opposite to the exhaust port (16), and the second surface of the metal foil (41) locates close to the exhaust port (16).

4. The vacuum heat insulator (13) according to any one of claims 1 to 3, wherein the metal foil (41) has a thickness of 10 µm or more.

5. The vacuum heat insulator (13) according to any one of claims 2 to 4, wherein the heat-resistant layer (42) has a thickness of equal to or more than 5 µm and less than 38 µm.

6. The vacuum heat insulator (13) according to any one of claims 3 to 5, wherein the adhesive layer (43) has a thickness of 25 µm or more.

7. The vacuum heat insulator (13) according to claim 1, wherein the reinforcement (44) has a thickness of 0.1 mm or more.

8. The vacuum heat insulator (13) according to any one of claims 1 to 7, wherein the exhaust hole (16) has a bore diameter of 1 mm or more.

9. A heat insulating container comprising the vacuum heat insulator (13) according to any one of claims 1 to 8.

10. A heat insulating wall comprising the vacuum heat insulator (13) according to any one of claims 1 to 8.

## Patentansprüche

1. Vakuum-Wärmeisolator (13), umfassend:
einen Behälter, der eine luftdichte Struktur bildet;
ein Kernmaterial (5), das im Inneren des Behälters vorgesehen ist;
eine Absaugöffnung (16), die in dem Behälter vorgesehen ist; und
ein Dichtmittel (17) zum Abdichten der Absaugöffnung (16),
wobei
die Absaugöffnung (16) so konfiguriert ist, dass das Innere des Behälters durch die Absaugöffnung (16) evakuiert werden kann,
das Dichtmittel (17) so konfiguriert ist, dass es die Absaugöffnung (16) abdichtet, während ein Vakuum im Inneren des Behälters aufrechterhalten wird, und
das Dichtmittel (17) mindestens eine Metallfolie (41) enthält,
der Behälter eine Innenplatte (26) und eine Außenplatte (27) aufweist,
die Innenplatte (26) mit der Absaugöffnung (16) versehen ist,
**dadurch gekennzeichnet, dass** eine Verstärkung (44) zwischen der Innenplatte (26) und dem Kernmaterial (5) vorgesehen ist.

2. Vakuum-Wärmeisolator (13) nach Anspruch 1, wobei
das Dichtmittel (17) ferner eine hitzebeständige Schicht (42) mit einem Schmelzpunkt von 200 °C oder mehr aufweist, wobei die hitzebeständige Schicht (42) auf einer der Absaugöffnung (16) gegenüberliegenden Oberfläche der Metallfolie (41) vorgesehen ist.

3. Vakuum-Wärmeisolator (13) nach Anspruch 2, wobei
das Dichtmittel (17) ferner eine Klebstoffschicht (43) mit einem Schmelzpunkt von 180 °C oder weniger aufweist,
wobei die hitzebeständige Schicht (42) auf einer ersten Oberfläche der Metallfolie (41) und die Klebstoffschicht (43) auf einer zweiten Oberfläche der Metallfolie (41) vorgesehen ist,
wobei sich die erste Oberfläche der Metallfolie (41) gegenüber der Absaugöffnung (16) befindet und sich die zweite Oberfläche der Metallfolie (41) nahe der Absaugöffnung (16) befindet.

4. Vakuum-Wärmeisolator (13) nach einem der Ansprüche 1 bis 3, wobei
die Metallfolie (41) eine Dicke von 10 µm oder mehr aufweist.

5. Vakuum-Wärmeisolator (13) nach einem der Ansprüche 2 bis 4, wobei
die hitzebeständige Schicht (42) eine Dicke von gleich oder mehr als 5 µm und weniger als 38 µm aufweist.

6. Vakuum-Wärmeisolator (13) nach einem der Ansprüche 3 bis 5, wobei
die Klebstoffschicht (43) eine Dicke von 25 µm oder mehr aufweist.

7. Vakuum-Wärmeisolator (13) nach Anspruch 1, wobei
die Verstärkung (44) eine Dicke von 0,1 mm oder mehr aufweist.

8. Vakuum-Wärmeisolator (13) nach einem der Ansprüche 1 bis 7, wobei
die Absaugöffnung (16) einen Bohrungsdurchmesser von 1 mm oder mehr aufweist.

9. Wärmeisolierender Behälter, der den Vakuum-Wärmeisolator (13) nach einem der Ansprüche 1 bis 8 umfasst.

10. Wärmeisolierende Wand, die den Vakuum-Wärmeisolator (13) nach einem der Ansprüche 1 bis 8 umfasst.

## Revendications

1. Isolant thermique sous vide (13) comprenant :
un récipient constituant une structure étanche à l'air ;
un matériau de noyau (5) disposé à l'intérieur du récipient ;
un trou de sortie (16) disposé dans le récipient ; et
un matériau d'étanchéité (17) pour fermer hermétiquement le trou de sortie (16),
le trou de sortie (16) étant conçu pour une évacuation de l'intérieur du récipient à travers le trou de sortie (16),
le matériau d'étanchéité (17) étant conçu pour fermer hermétiquement le trou de sortie (16) tout en maintenant un vide à l'intérieur du récipient et
le matériau d'étanchéité (17) comprenant au moins une feuille métallique (41),
le récipient comprenant une plaque interne (26) et une plaque externe (27),
la plaque interne (26) étant pourvue du trou de sortie (16),
**caractérisé en ce qu'**un renfort (44) est disposé entre la plaque interne (26) et le matériau de noyau (5).

2. Isolant thermique sous vide (13) selon la revendication 1,
le matériau d'étanchéité (17) comprenant en outre une couche résistante à la chaleur (42) présentant un point de fusion de 200 °C ou plus, la couche résistante à la chaleur (42) étant disposée sur une surface de la feuille métallique (41) opposée au trou de sortie (16).

3. Isolant thermique sous vide (13) selon la revendication 2,
le matériau d'étanchéité (17) comprenant en outre une couche adhésive (43) présentant un point de fusion de 180 °C ou moins,
la couche résistante à la chaleur (42) étant disposée sur une première surface de la feuille métallique (41) et la couche adhésive (43) étant disposée sur une deuxième surface de la feuille métallique (41),
la première surface de la feuille métallique (41) étant située à l'opposé du trou de sortie (16) et la deuxième surface de la feuille métallique (41) étant située à proximité du trou de sortie (16).

4. Isolant thermique sous vide (13) selon l'une quelconque des revendications 1 à 3, la feuille métallique (41) présentant une épaisseur de 10 µm ou plus.

5. Isolant thermique sous vide (13) selon l'une quelconque des revendications 2 à 4, la couche résistante à la chaleur (42) présentant une épaisseur supérieure ou égale à 5 µm et inférieure à 38 µm.

6. Isolant thermique sous vide (13) selon l'une quelconque des revendications 3 à 5, la couche adhésive (43) présentant une épaisseur de 25 µm ou plus.

7. Isolant thermique sous vide (13) selon la revendication 1, le renfort (44) présentant une épaisseur de 0,1 mm ou plus.

8. Isolant thermique sous vide (13) selon l'une quelconque des revendications 1 à 7, le trou de sortie (16) présentant un diamètre de passage de 1 mm ou plus.

9. Récipient d'isolation thermique comprenant l'isolant thermique sous vide (13) selon l'une quelconque des revendications 1 à 8.

10. Paroi d'isolation thermique comprenant l'isolant thermique sous vide (13) selon l'une quelconque des revendications 1 à 8.
